# EUROPEAN PATENT APPLICATION

(11) **EP 4 707 892 A1**
(43) Date of publication of application: **11.03.2026**
(21) Application number: 25199879.5
(22) Date of filing: 03.09.2025
(51) Int. Cl.: G02B 6/44

(54) **TELECOMMUNICATIONS PANEL AND FIBER MANAGEMENT STRUCTURES**

(30) Priority: 10.09.2024 US 202418829455
(71) Applicant: AFL Telecommunications LLC, Duncan, SC 29334 (US)
(72) Inventor: WONG, Kai, DUNCAN, 29334 (US); CHONG, Chon Haow, DUNCAN, 29334 (US); KOK, Fook Sang, DUNCAN, 29334 (US)
(74) Representative: Serjeants LLP

(57) **Abstract**

A telecommunications panel (100) includes a body (110) having a cassette opening (112), a fiber management tray (160), and a cable management guide (140). An adjustment arm assembly (120) is attachable to a frame and includes a first sleeve (122) having a first mount interface (121) attachable to the frame and a second sleeve (126) having a second mount interface (123) attachable to the fiber management tray (160). The first sleeve (122) includes a first sleeve opening (132) configured to receive a latch assembly selectively permitting adjustment of the second sleeve (126) along a depth direction to and from the first sleeve (122). The fiber management tray (160) is attachable to the second mount interface (123). The tray (160) includes a platform having a platform opening. The cable management guide (140) includes a guide frame having a plurality of sidewalls with a selectively openable passage providing access to a cable routing area. An insert member extends from the guide frame and is selectively positioned into the platform opening.

## Description

### FIELD

The present disclosure relates generally to fiber optic telecommunications equipment. More particularly, the present disclosure relates to fiber optic telecommunications fiber management housings and routing structures.

### BACKGROUND

For fiber optic telecommunications and data centers, Very Small Form Factor (VSFF) connectors and adapters have helped significantly increase fiber-count density to as much as 288 fibers per one rack-unit (RU) space. However, while data centers and designers have significantly increased fiber-count density, patch cord and cable management remains an issue, and increasingly so, as fiber-count densities increase.

Additionally, fiber management devices and modules added onto existing data racks and trays may require additional area and volume beyond the rack-unit at which the fiber density is provided, which may generally be unavailable.

As such, devices, modules, and systems for patch cord and fiber management would be beneficial and advantageous. Additionally, a telecommunications datarack panel addressing one or more aforementioned issues would be advantageous and beneficial.

### BRIEF DESCRIPTION

Aspects and advantages of the invention will be set forth in part in the following description, or may be understood from the description, or may be learned through practice of the invention.

An aspect of the present disclosure is directed to a telecommunications panel including a body having a cassette opening, a fiber management tray, and a cable management guide. A mount arm attaches the body to a frame. An adjustment arm assembly is attachable to the frame. The adjustment arm assembly includes a first sleeve having a first mount interface attachable to the frame. The adjustment arm assembly includes a second sleeve having a second mount interface attachable to the fiber management tray. The first sleeve includes a first sleeve opening configured to receive a latch assembly. The latch assembly selectively permits adjustment of the second sleeve along a depth direction to and from the first sleeve. The fiber management tray is attachable to the second mount interface. The tray includes a platform having a platform opening. The cable management guide includes a guide frame having a plurality of sidewalls. The plurality of sidewalls forms a cable routing area. An insert member extends from the guide frame. The insert member is selectively positioned into the platform opening. At least one of the plurality of sidewalls includes a selectively openable passage providing access to the cable routing area.

The plurality of sidewalls of the guide frame may comprise an articulatable wall configured to selectively open the passage to provide access to the cable routing area.

The guide frame may comprise a notch at the plurality of sidewalls. The notch may form at least one sidewall as an articulatable wall configured to selectively open the passage to provide access to the cable routing area.

The guide frame may be approximately one rack-unit tall along the vertical direction.

The guide frame may be approximately two rack-units tall along the vertical direction.

The fiber management tray may comprise a plurality of platform openings positioned in adjacent arrangement along a lateral direction. The plurality of platform openings may be configured to receive a plurality of cable management guides at the platform in adjacent arrangement along the lateral direction.

The second sleeve may be insertable into the first sleeve along the depth direction. A latch assembly may comprise a lever comprising a user interface end extending from the second sleeve distal to an attachment end at which the latch assembly inserts into the first sleeve opening.

The lever may comprise a spring and pivot member positioned between the user interface end and the latch. The spring may be configured to generate a reactive force to position the latch into the first sleeve opening at the first sleeve.

The adjustment arm assembly may comprise a central sleeve insertable into the first sleeve. The second sleeve may be insertable into the central sleeve. The central sleeve may be positioned between the first sleeve and the second sleeve along the depth direction.

The central sleeve may comprise a first attachment end receivable into the first sleeve opening from within the first sleeve.

The central sleeve may comprise a second attachment end receivable into a second sleeve opening at the second sleeve. The second attachment end may be receivable into the second sleeve opening from outside of the second sleeve.

The first sleeve may comprise a plurality of first sleeve openings positioned in adjacent arrangement along the depth direction. A first slot may extend along the depth direction to the plurality of first sleeve openings. The first slot permits translation of the first attachment end along the depth direction to the plurality of first sleeve openings.

The central sleeve may comprise a plurality of second openings positioned in adjacent arrangement along the depth direction. The second sleeve may comprise a second attachment end receivable into at least one of the second openings.

The central sleeve may comprise a first lever extending co-directional to a first clip. A first attachment end may be positioned at a distal end of the first lever to position the first attachment end into the first sleeve opening. The first clip may comprise a first protrusion positioned adjacent to the first attachment end across the first sleeve opening.

The second sleeve may comprise a second lever extending co-directional to a second clip. A second attachment end may be positioned at a distal end of the second lever to position the second attachment end into the second opening. The second clip may comprise a second protrusion positioned adjacent to the second attachment end across the second opening.

The telecommunications panel may further comprise a hinge assembly comprising a first arm attachable to the second mount interface. A second arm may be attachable to a door.

The hinge assembly may comprise a torque detent hinge.

The guide frame may be approximately one rack-unit tall or two rack-units tall along the vertical direction.

The second mount interface may comprise an interface opening configured to receive an attachment member of the fiber management tray.

The attachment member may comprise a spring loaded screw.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 depicts a perspective view of an exemplary embodiment of a telecommunications panel assembly in accordance with aspects of the present disclosure.
Fig. 2A depicts a perspective view of an exemplary embodiment of a telecommunications panel in accordance with aspects of the present disclosure.
Fig. 2B depicts a perspective view of an exemplary embodiment of a telecommunications panel in accordance with aspects of the present disclosure.
Fig. 3 depicts a perspective view of an exemplary embodiment of a telecommunications panel, including fiber management guides exploded for detail, in accordance with aspects of the present disclosure.
Fig. 4A depicts a perspective view of an exemplary embodiment of a telecommunications panel in accordance with aspects of the present disclosure.
Fig. 4B depicts a detailed view of a portion of Fig. 4A in accordance with aspects of the present disclosure.
Fig. 5A depicts a perspective view of an exemplary embodiment of a 2-RU telecommunications panel in accordance with aspects of the present disclosure.
Fig. 5B depicts a perspective view of an exemplary embodiment of a 2-RU telecommunications panel in accordance with aspects of the present disclosure.
Fig. 6A depicts a perspective view of an exemplary embodiment of a 6-RU telecommunications panel in accordance with aspects of the present disclosure.
Fig. 6B depicts a perspective view of an exemplary embodiment of a 6-RU telecommunications panel in accordance with aspects of the present disclosure.
Fig. 7 depicts a perspective view of an exemplary embodiment of an adjustment arm assembly in accordance with aspects of the present disclosure.
Fig. 8 depicts a side cross sectional view of the adjustment arm assembly of Fig. 7 in accordance with aspects of the present disclosure.
Fig. 9 depicts a perspective view of an embodiment of a first sleeve of the adjustment arm assembly of Fig. 7 in accordance with aspects of the present disclosure.
Fig. 10 depicts a perspective partially transparent view of an embodiment of a second sleeve of the adjustment arm assembly of Fig. 7 in accordance with aspects of the present disclosure.
Fig. 11 depicts a perspective view of an exemplary embodiment of an adjustment arm assembly in accordance with aspects of the present disclosure.
Fig. 12 depicts a side cross sectional view of the adjustment arm assembly of Fig. 11 in accordance with aspects of the present disclosure.
Fig. 13 depicts a perspective view of an embodiment of a first sleeve of the adjustment arm assembly of Fig. 11 in accordance with aspects of the present disclosure.
Fig. 14 depicts a perspective view of an embodiment of a central sleeve of the adjustment arm assembly of Fig. 11 in accordance with aspects of the present disclosure.
Fig. 15 depicts a perspective view of an embodiment of a second sleeve of the adjustment arm assembly of Fig. 11 in accordance with aspects of the present disclosure.
Fig. 16 depicts a perspective view of an exemplary embodiment of an adjustment arm assembly in accordance with aspects of the present disclosure.
Fig. 17 depicts a side cross sectional view of the adjustment arm assembly of Fig. 16 in accordance with aspects of the present disclosure.
Fig. 18 depicts a perspective view of an embodiment of a first sleeve of the adjustment arm assembly of Fig. 16 in accordance with aspects of the present disclosure.
Fig. 19 depicts a perspective view of an embodiment of a central sleeve of the adjustment arm assembly of Fig. 16 in accordance with aspects of the present disclosure.
Fig. 20 depicts a perspective view of an embodiment of a second sleeve of the adjustment arm assembly of Fig. 16 in accordance with aspects of the present disclosure.
Fig. 21 depicts a perspective view of an embodiment of a fiber management tray in accordance with aspects of the present disclosure.
Fig. 22 depicts a perspective view of an embodiment of a fiber management tray in accordance with aspects of the present disclosure.
Fig. 23 depicts a perspective view of an embodiment of a fiber management tray in accordance with aspects of the present disclosure.
Fig. 24 depicts a perspective view of an embodiment of a cable management guide in accordance with aspects of the present disclosure.
Fig. 25 depicts a side view of the cable management guide of Fig. 24 in accordance with aspects of the present disclosure.
Fig. 26 depicts a perspective view of an embodiment of a cable management guide in accordance with aspects of the present disclosure.
Fig. 27 depicts a side view of the cable management guide of Fig. 26 in an open position in accordance with aspects of the present disclosure.
Fig. 28 depicts a side view of the cable management guide of Fig. 26 in a closed position in accordance with aspects of the present disclosure.
Fig. 29 depicts a perspective view of an embodiment of a cable management guide in an open position in accordance with aspects of the present disclosure.
Fig. 30 depicts a perspective view of an embodiment of a cable management guide in accordance with aspects of the present disclosure.
Fig. 31 depicts a side view of the cable management guide of Fig. 30 in a closed position in accordance with aspects of the present disclosure.
Fig. 32 depicts a side view of the cable management guide of Fig. 30 in an open position in accordance with aspects of the present disclosure.
Fig. 33 depicts a perspective view of an embodiment of a hinge assembly in accordance with aspects of the present disclosure.
Fig. 34 depicts a perspective view of an embodiment of a hinge assembly in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. The terms "includes" and "including" are intended to be inclusive in a manner similar to the term "comprising." Similarly, the term "or" is generally intended to be inclusive (i.e., "A or B" is intended to mean "A or B or both"). In addition, here and throughout the specification and claims, range limitations may be combined and/or interchanged. Such ranges are identified and include all the sub-ranges contained therein unless context or language indicates otherwise. For example, all ranges disclosed herein are inclusive of the endpoints, and the endpoints are independently combinable with each other. The singular forms "a," "an," and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "generally," "about," "approximately," and "substantially," are not to be limited to the precise value specified. In at least some instances, the approximating language may correspond to the precision of an instrument for measuring the value, or the precision of the methods or machines for constructing or manufacturing the components and/or systems.

As used herein, the term "rack unit" (RU) is understood by those skilled in the art as a unit of measure of approximately 1.75 inches (in) or approximately 44.45 millimeters (mm), or up to 0.03125 in or 0.794 mm less when applied to telecommunications equipment attached to a mount structure.

Dimensions provided herein may include approximations of +/-2% of any discrete quantity, or approximations of +2% of a maximum value over a given range or -2% of the maximum value under the given range, unless otherwise provided herein.

The word "exemplary" is used herein to mean "serving as an example, instance, or illustration." In addition, references to "an embodiment" or "one embodiment" does not necessarily refer to the same embodiment, although it may. Any implementation described herein as "exemplary" or "an embodiment" is not necessarily to be construed as preferred or advantageous over other implementations. Moreover, each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

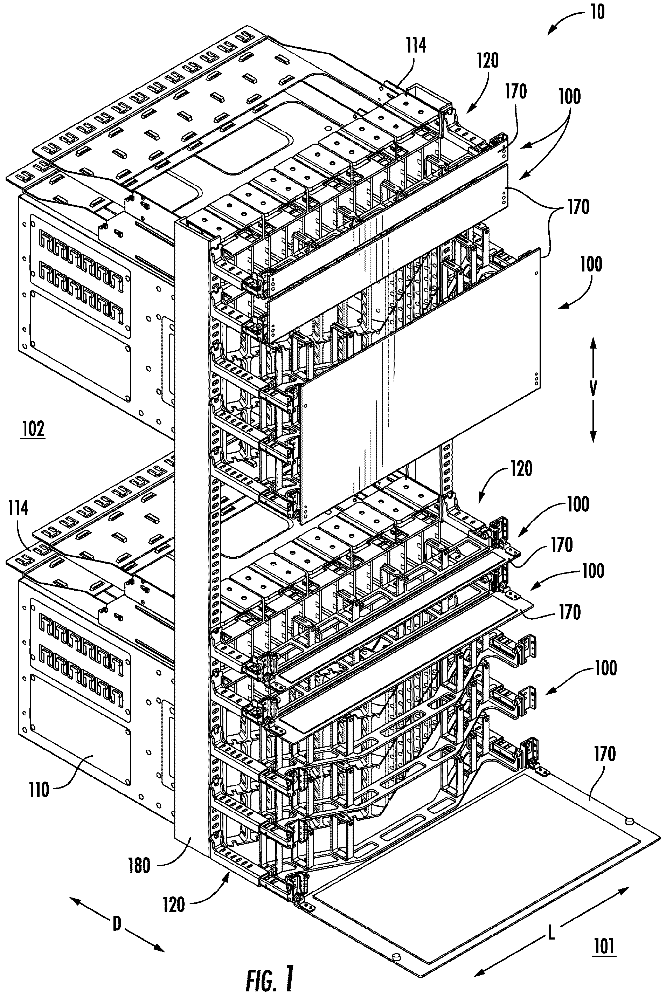

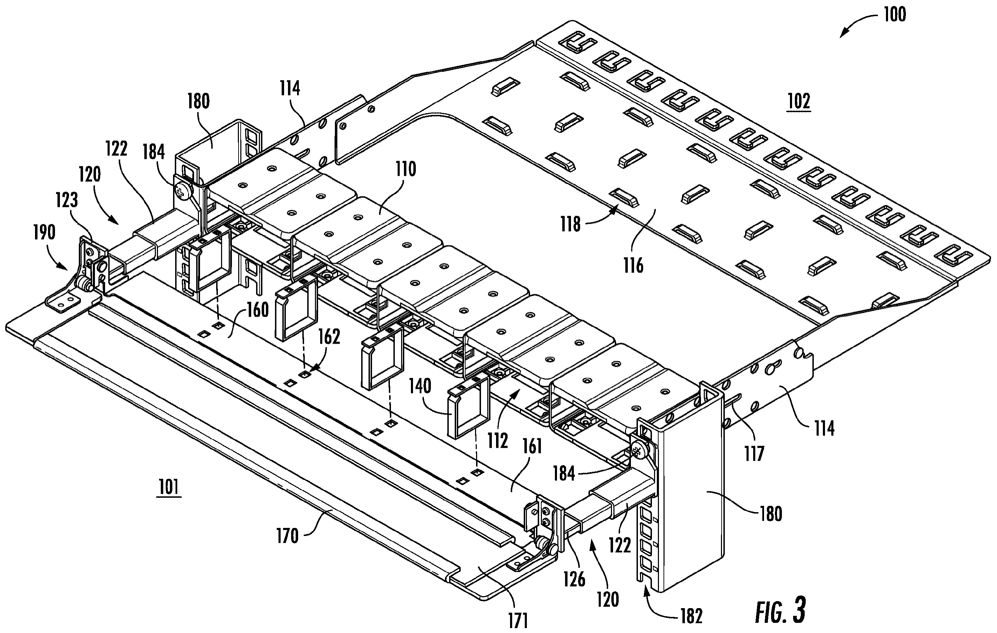

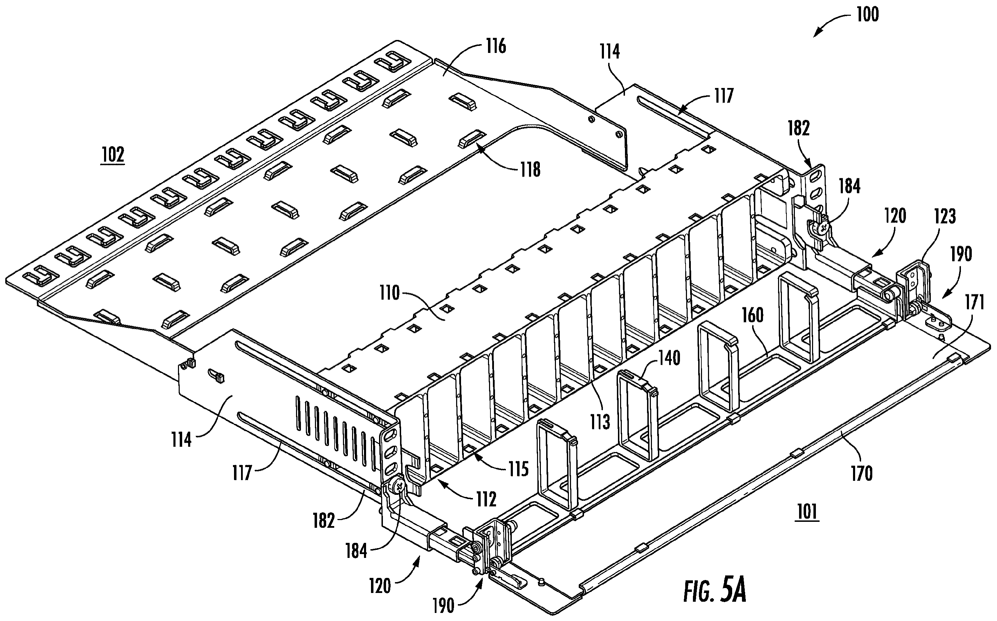

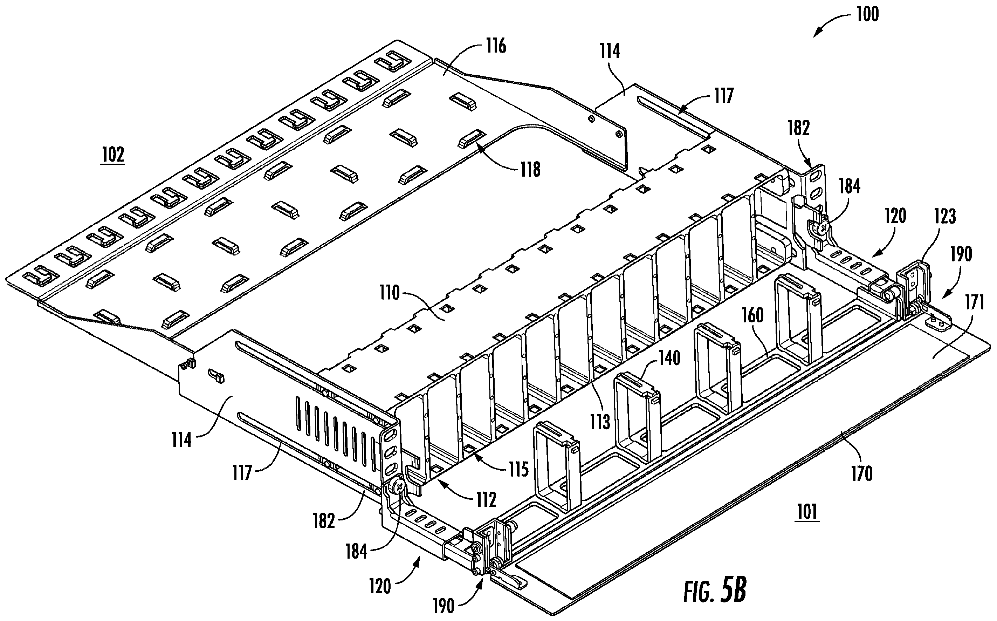

Referring now to the drawings, Figs. 1-6B depict embodiments of a telecommunications panel 100 in accordance with aspects of the present disclosure. A reference lateral direction L, depth direction D, and vertical direction V are provided. A first end 101 is separated along the depth direction D from a second end 102. The first end 101 may reference a front end from which a user may access the panel 100. The rear end 102 may reference a rear end from which the user may access the panel 100, or from which patch cords, fibers, cables, or other telecommunications accessories may route to or from the panel 100.

Fig. 1 provides a perspective view of a telecommunications panel assembly 10 including a frame 180 at which one or more telecommunications panels 100 is attachable.

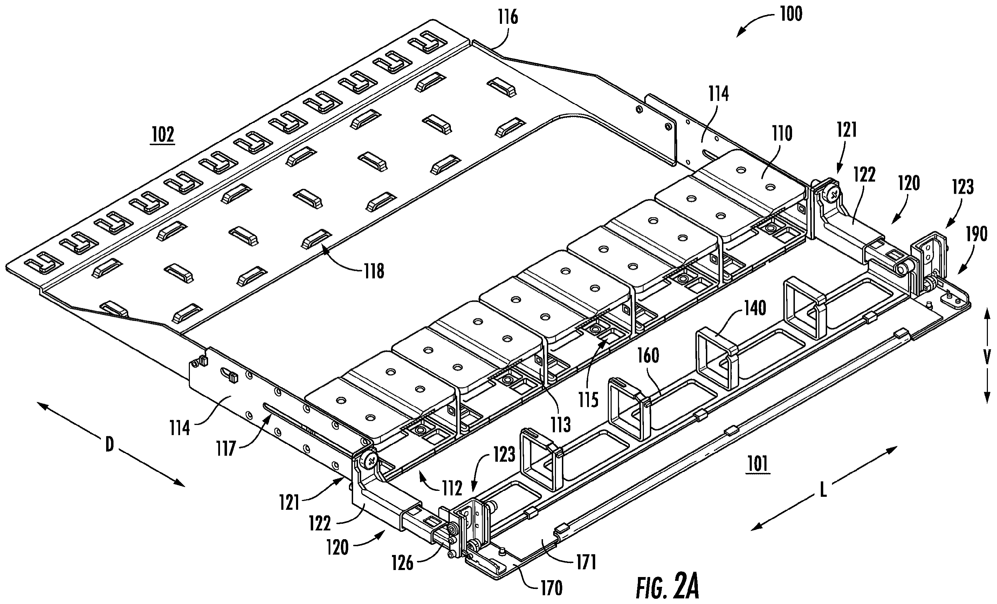

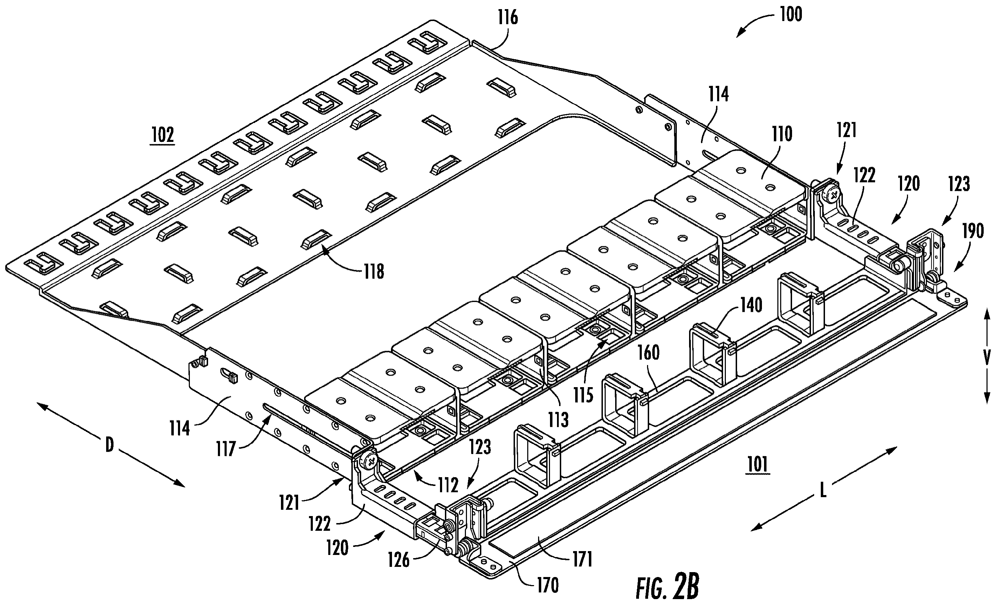

As provided in further detail in Figs. 2A-2B, Fig. 3, Figs. 4A-4B, Figs. 5A-5B, and Figs. 6A-6B, the panel 100 includes a body 110 including an opening 112 (e.g., cassette opening) into which a cassette or other fiber optic telecommunications module is configured to be received. The body 110 is positioned along the depth direction D between the first end 101 and the second end 102. A partition wall 113 extends along the depth direction D to form one or more bays into which the cassette or other fiber optic telecommunications module is receivable. The body 110 may include locks or latches 115 configured to selectively and releasably attach the cassette at the opening 112.

The body 110 is attached to a mount arm 114. The panel 100 may include a pair of mount arms 114 separated from one another along the lateral direction L. The body 110 is attached to the mount arms 114 to facilitate user access from the first end 101, the second end 102, or both.

A fiber management tray 116 is attachable to the mount arms 114. The fiber management tray 116 is attachable to the mount arms 114 at the second end 102, such as to form a rear fiber management tray. The fiber management tray 116 may include openings and bridges 118 forming attachment interfaces for receiving fiber optic modules, tie wraps, straps, cable bases, mounts, or other cable management structures.

The mount arm 114 includes an opening 117 at which the body 110 is attachable to the mount arm 114. The opening 117 may include a slot extending along the depth direction D. A fastener may extend through the opening 117 into the body 110 to attach the body 110 to the mount arm 114.

In various embodiments, the mount arm 114 is included as a portion of a cabinet or frame 180 at which the panel 100 is mounted. The mount arm 114, frame 180, or both, include an opening 182 configured to receive a fastener 184 for mounting the mount arm 114 to the frame 180.

An adjustment arm assembly 120 is attachable to the frame 180, mount arm 114, or both, at opening 182. The assembly 120 includes a first sleeve 122 having a first mount interface 121 attachable to the frame 180, mount arm 114. The assembly 120 includes a second sleeve 126 insertable into the first sleeve 122. The second sleeve 126 includes a second mount interface 123 attachable to a fiber management tray 160.

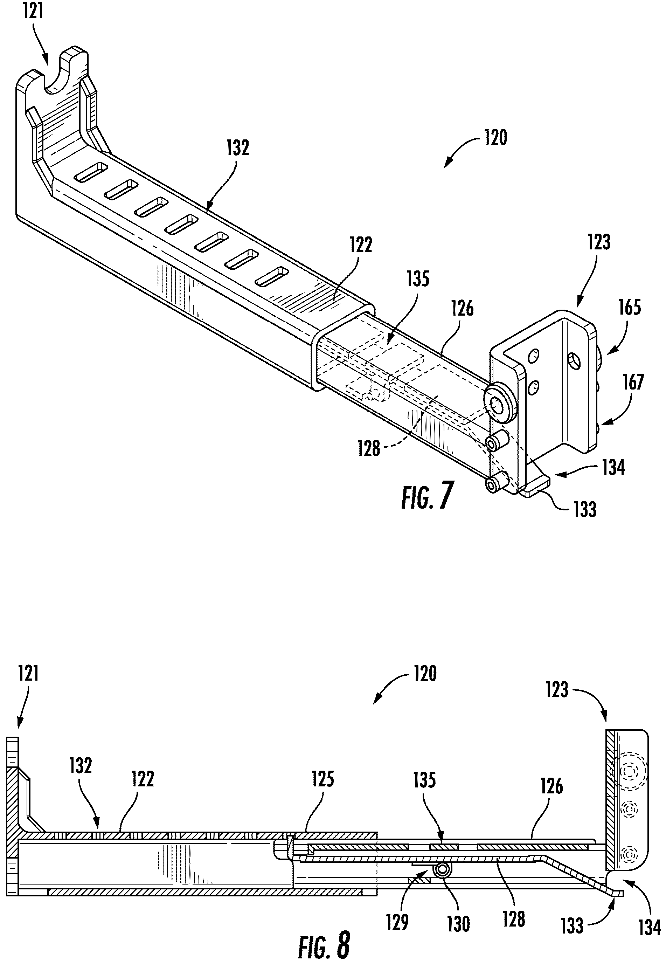

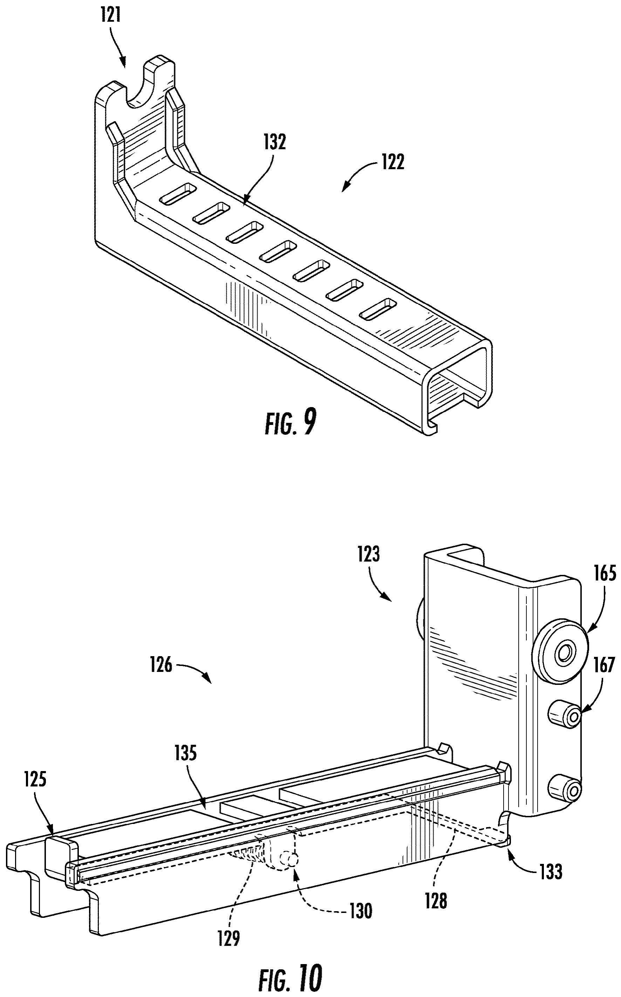

Referring to Figs. 7-10, in various embodiments, the first sleeve 122 includes a first sleeve opening 132 configured to receive an attachment end 125 of a latch assembly 131. Latch assembly 131 includes a lever 128 forming a member extending through the second sleeve 126 from a user interface end 133 to the attachment end 125. The user interface end 133 is extendable through an opening 134 (e.g., access opening). In some embodiments, the second sleeve 126 includes a second sleeve opening 135 through which the attachment end 125 is extendable into the second sleeve 126 and the opening 132 at the first sleeve 122. For instance, lever 128 includes the user interface end 133 extending from the second sleeve 126 distal along the depth direction D to attachment end 125 at which the latch assembly 131 inserts into the first opening 132.

The lever 128 may include a spring 129 configured to generate a biasing or reactive force to position the attachment end 125 into opening 132 at the first sleeve 122. In some embodiments, the spring 129 may form a compression spring or other appropriate type of spring. A pivot member 130, such as a pin, may provide a pivot point at the lever 128 between the user interface end 133 and the attachment end 125.

In various embodiments, openings 132, 135 are positioned in adjacent arrangement along the depth direction D through respective sleeves 122, 126. Openings 132, 135 may facilitate tool-less adjustment along the depth direction D, such as may facilitate ease of use and reduce setup time.

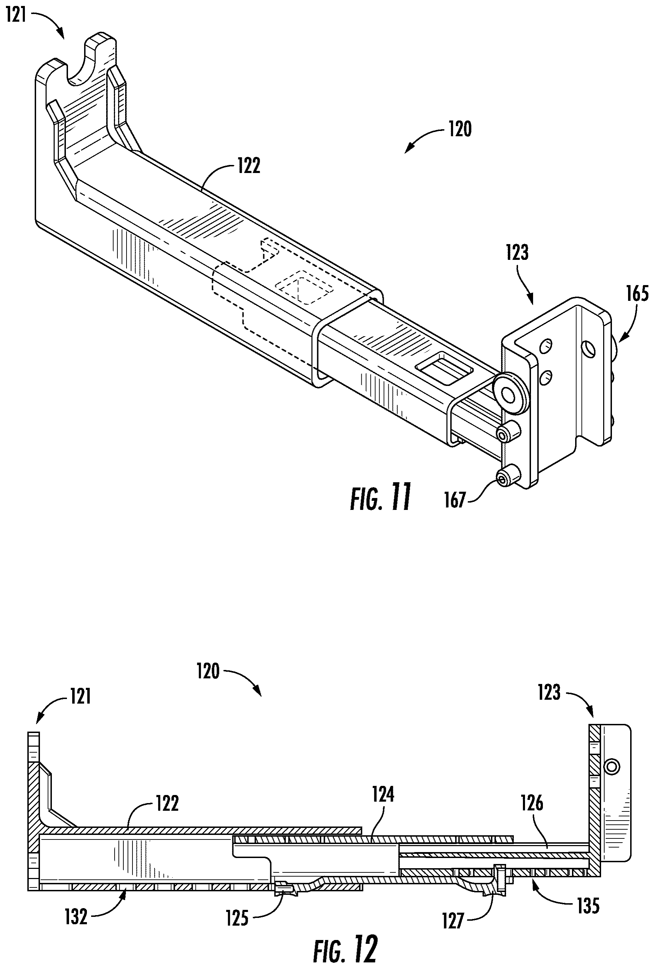

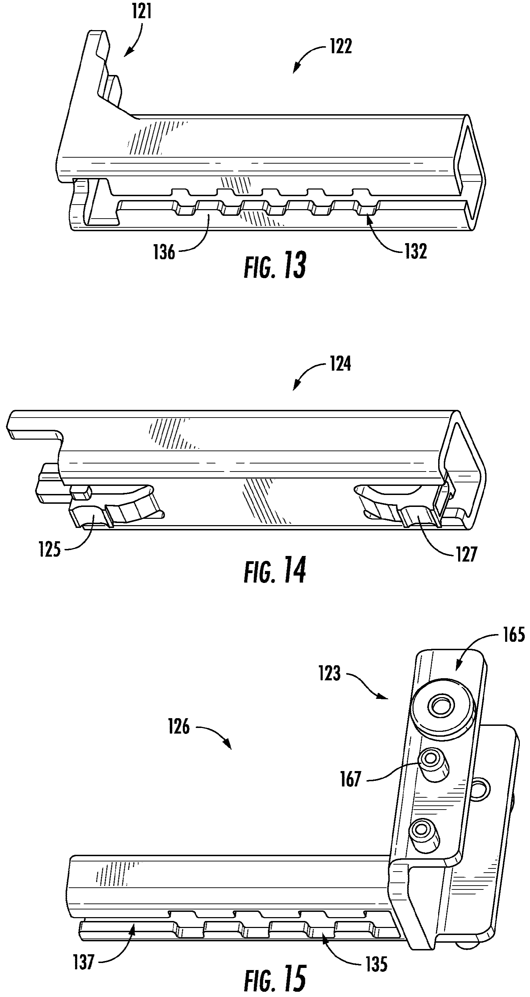

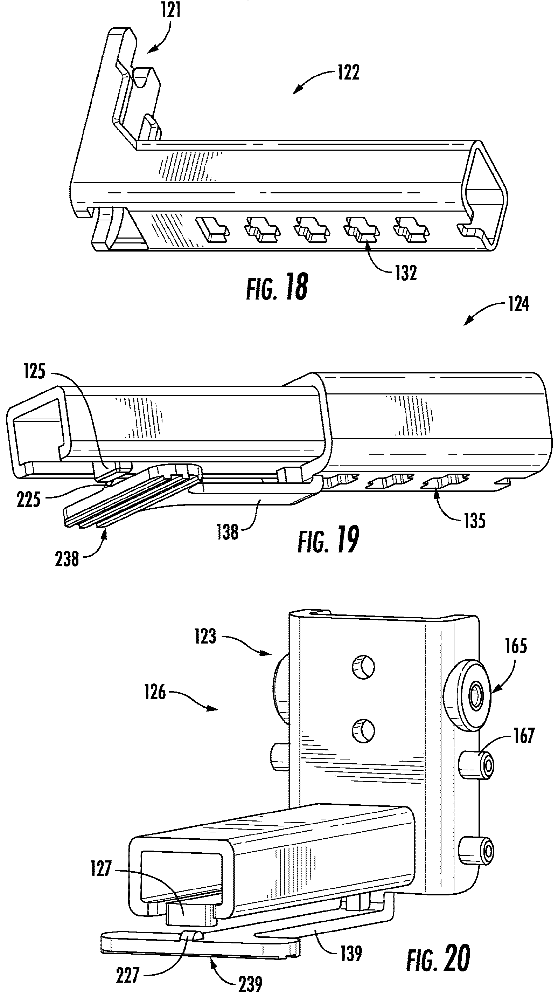

Referring to Figs. 11-20, in some embodiments, assembly 120 includes a central sleeve 124 positioned between the first sleeve 122 and the second sleeve 126. The central sleeve 124 is extendable into the first sleeve 122. The second sleeve 126 is extendable into the second sleeve 126. For instance, the central sleeve 124 is positioned along the depth direction D between the first sleeve 122 and the second sleeve 126.

In various embodiments, assembly 120 includes a first attachment end or latch 125 and a second attachment end or latch 127. First attachment end 125 is attachable to opening 132 and second attachment end 127 is attachable to opening 135. Referring to Figs. 11-15, latches 125, 127 are positioned at the central sleeve 124. A first slot 136 extends through first sleeve 122 to connect the plurality of openings 132 along the depth direction D. First attachment end 125 extends into first sleeve 122 along slot 136 to releasably attach into opening 132. Slot 136 permits translation of the first attachment end 125 along the depth direction D to the plurality of openings 132.

Referring still to Figs. 11-15, a second slot 137 extends through second sleeve 126 to connect the plurality of openings 135 along the depth direction D. Second attachment end 127 extends into second sleeve 126 along slot 137 to releasably attach into opening 135.

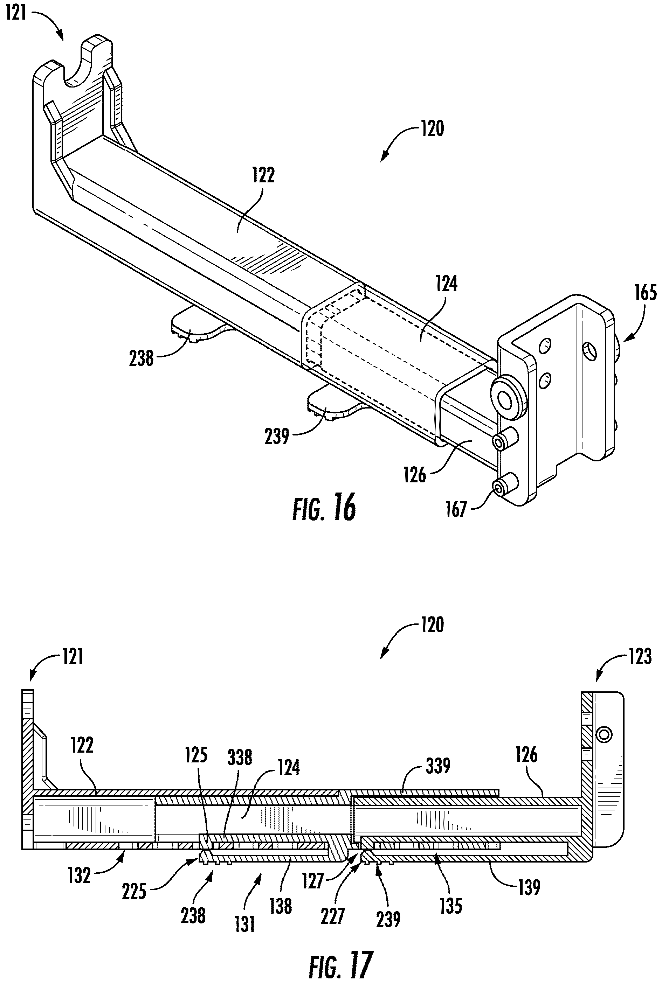

Referring now to Figs. 16-20, openings 132 are discrete and separate from one another at the first sleeve 122. Central sleeve 124 includes latch 125 extending into the opening 132 from outside of the first sleeve 122. For instance, a portion of the central sleeve 124 extends into the first sleeve 122, such as described above. First attachment end 125 extends from outside to allow a user to engage the latch 125.

Referring still to Figs. 16-20, openings 135 are formed as discrete and separate openings at the central sleeve 124. Second sleeve 126 includes latch 127 to extend into opening 135 from outside of the central sleeve 124, such as described in regard to latch 125. A portion of the central sleeve 124 extends into the second sleeve 126.

Referring still to Figs. 16-20, the central sleeve 124 and the second sleeve 126 include a clip 138, 139 extending along the depth direction D. Central sleeve 124 includes a first flexible member or lever 338 extending co-directional to a first clip 138. Central sleeve 124 includes first attachment end 125 positioned at a distal end of the first lever 338. Attachment end 125 is positioned along the depth direction D to selectively position into the opening 132.

Second sleeve 126 includes a second flexible member or lever 339 extending co-directional to a second clip 139. Second sleeve 126 includes second attachment end 127 positioned at a distal end of the second lever 339. Attachment end 127 is positioned along the depth direction D to selectively position into the opening 135.

First lever 338 extends into first sleeve 122 to position the first attachment end 125 into opening 132. Second lever 339 extends into the central sleeve 124 to position the second attachment end 127 into opening 135. First clip 138 includes a first protrusion 225 positioned adjacent to the first attachment end 125. Second clip 139 includes a second protrusion 227 positioned adjacent to the second attachment end 127. Clips 138, 139 include a user interface 238, 239 to receive force from a user to push the protrusion 225, 227 onto respective attachment ends 125, 127. For instance, clips 138, 139 extend co-directional to respective levers 338, 339 to position the attachment ends 125, 127 across from respective protrusions 225, 227 across respective openings 132, 135. The user may apply force to press the user interfaces 238, 239 and selectively release the latch assembly 131 from the first sleeve 122, the central sleeve 124, or both, to allow depth adjustment of the adjustment arm assembly 120.

Referring now to Figs. 7-23, embodiments of the adjustment arm assembly 120 are configured to receive and support the fiber management tray 160 at the second mount interface 123. In various embodiments, second mount interface 123 includes a guide member 167, such as a pin, insertable into a slot 166 at the fiber management tray 160. Second mount interface 123 includes an opening 165 configured to receive an attachment member 164, such as a pin, fastener, or spring loaded device, insertable into opening 165 at the fiber management tray 160. For instance, tray 160 may include a post 168 at which the slot 166 and member 164 are positioned.

In some embodiments, the attachment member 164 includes a spring loaded device (e.g., a spring loaded screw) to facilitate assembly or disassembly of the tray 160 to the second sleeve 126 of the adjustment arm assembly 120.

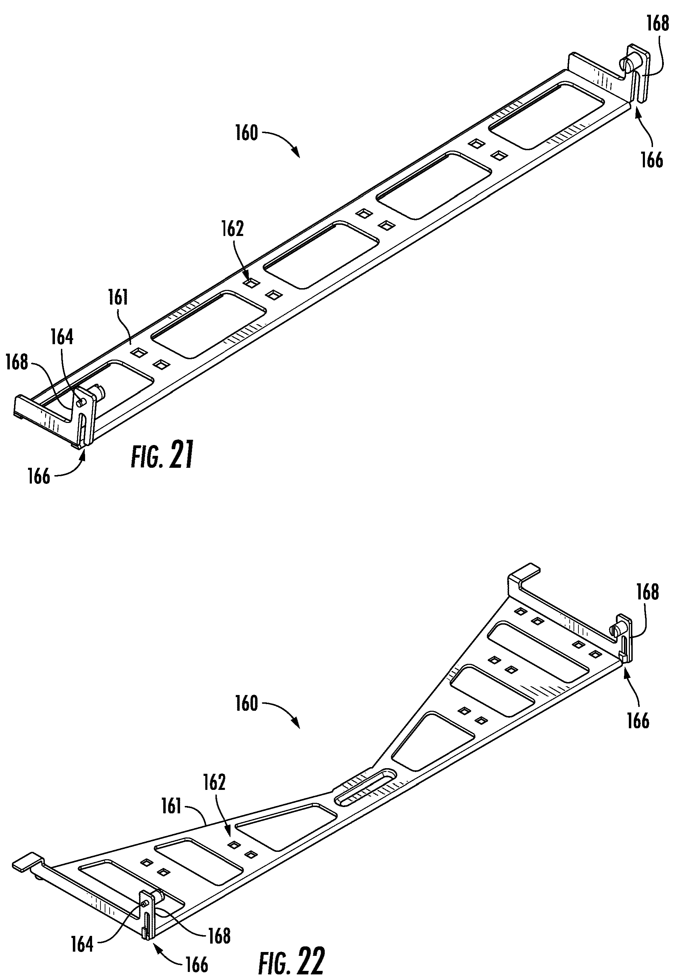

Referring to Fig. 21, tray 160 may include a substantially flat or laterally extending platform 161. Referring to Figs. 22-23, tray 160 may include a V-shaped or indented platform 161, such as may form an increased opening area between the platform 161 and the body 110.

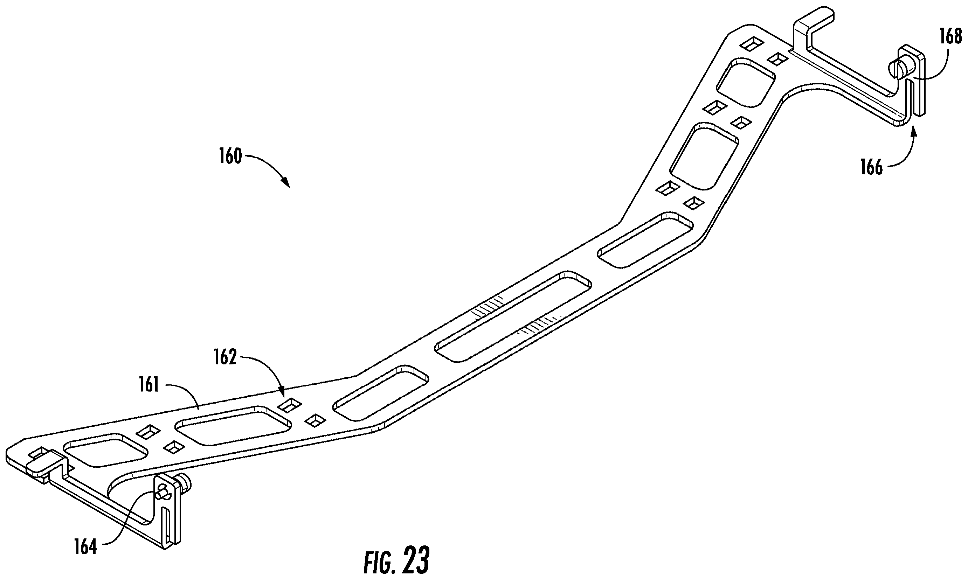

In various embodiments, an opening 162 is formed into the platform 161 to receive a cable management guide 140. Referring to Figs. 23-24, an embodiment of a cable management guide 140 is provided. The guide 140 includes an insert member 142 configured to extend into opening 162. Member 142 may include plugs, teeth, or snaps configured to bend and flex onto edges or perimeter of platform 161 at the opening 162. Guide 140 includes a plurality of walls 148 forming a guide frame 144 including a base wall 146 from which the member 142 extends. Sidewalls 148 form an area 147 within which cables are extendable for fiber optic routing management.

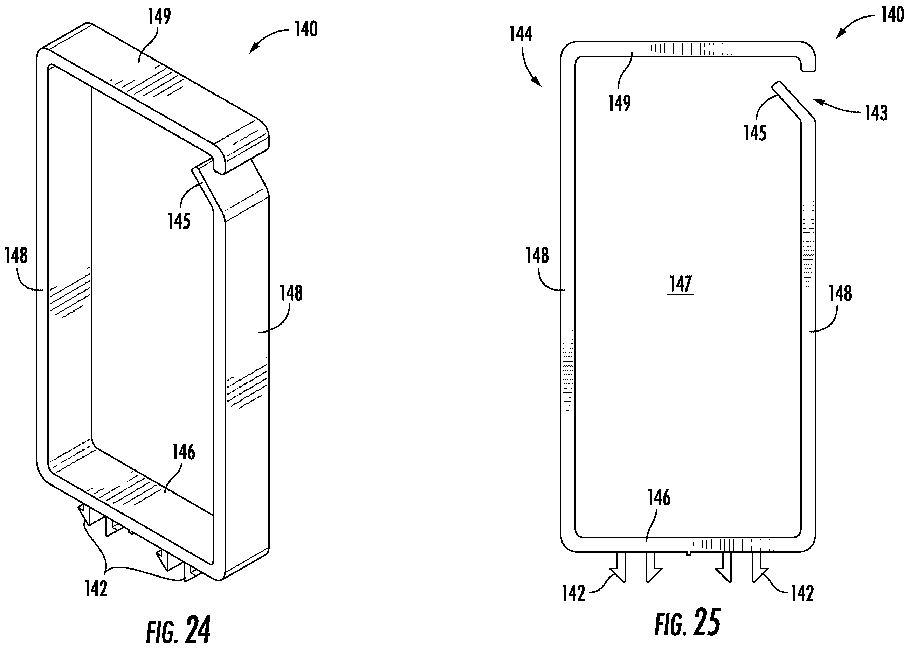

Referring to Figs. 24-25, at least one sidewall 148 forms a passage 143 through which a user may extend cables to and from the area 147. The sidewalls 148 include a deformable, elastic, or articulatable wall 145 configured to permit opening of passage 143 into the sidewall 148. For instance, passage 143 may form a side entry through the frame 144 into or from the area 147.

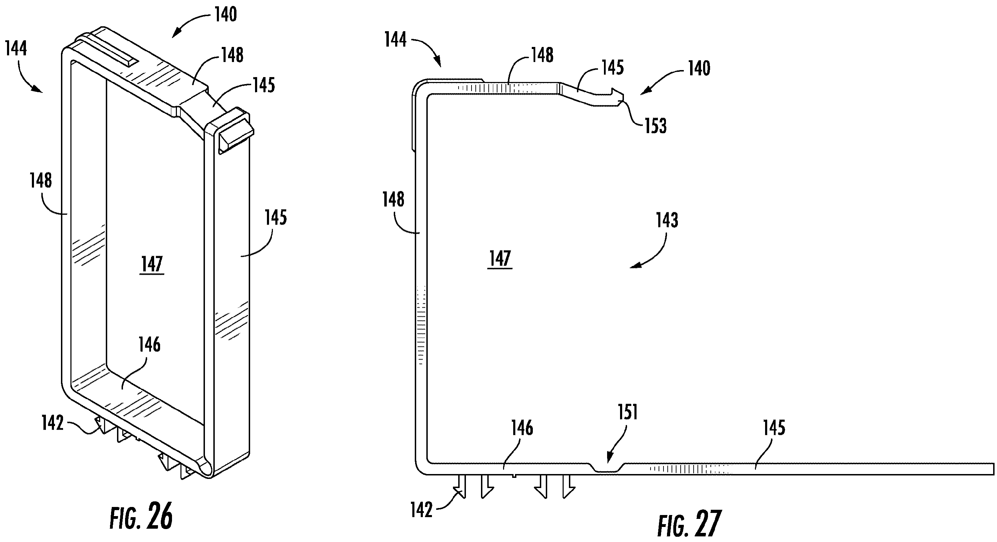

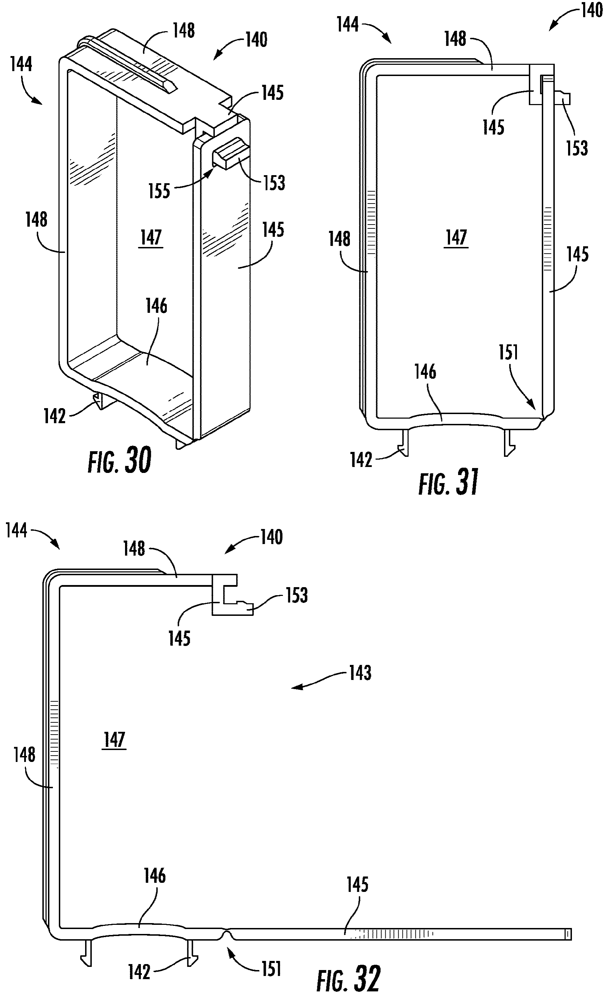

Referring now to Figs. 26-32, in some embodiments, at least one sidewall 148 is moveable to form a selectively articulatable wall 145 to permit entry and egress of cables to the area 147. The sidewall 148 may include an opening 155 into which a latch 153 at the end of an adjacent sidewall 148 is extendable. For instance, latch 153 may form a curled, hooked, or L-shaped end of a deformable wall 145, such as depicted at Figs. 30-32. Frame 144 includes a notch 151 at the sidewalls 148. Notch 151 forms at least one of the sidewalls 148 as the articulatable wall 145 to selectively open the passage 143 to provide access to area 147. For instance, notch 151 promotes bending or flexing of the articulatable sidewall 145 from a closed position (e.g., Figs. 25, 27) to an open position (e.g., Fig. 26).

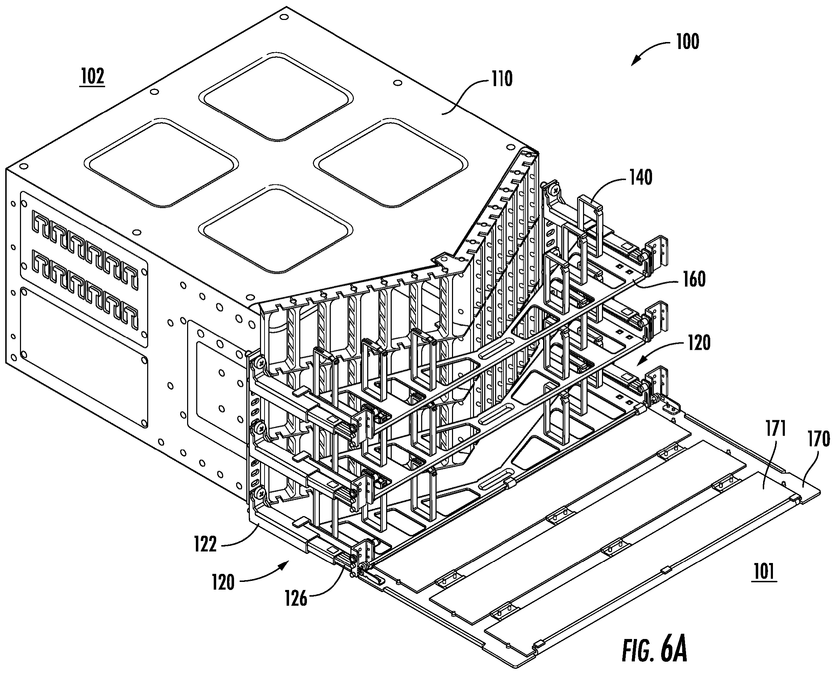

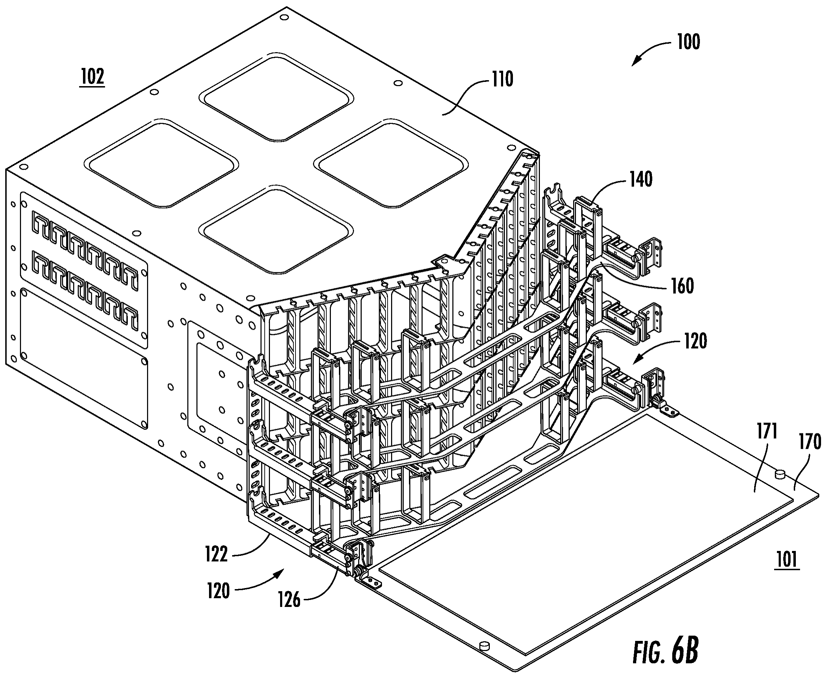

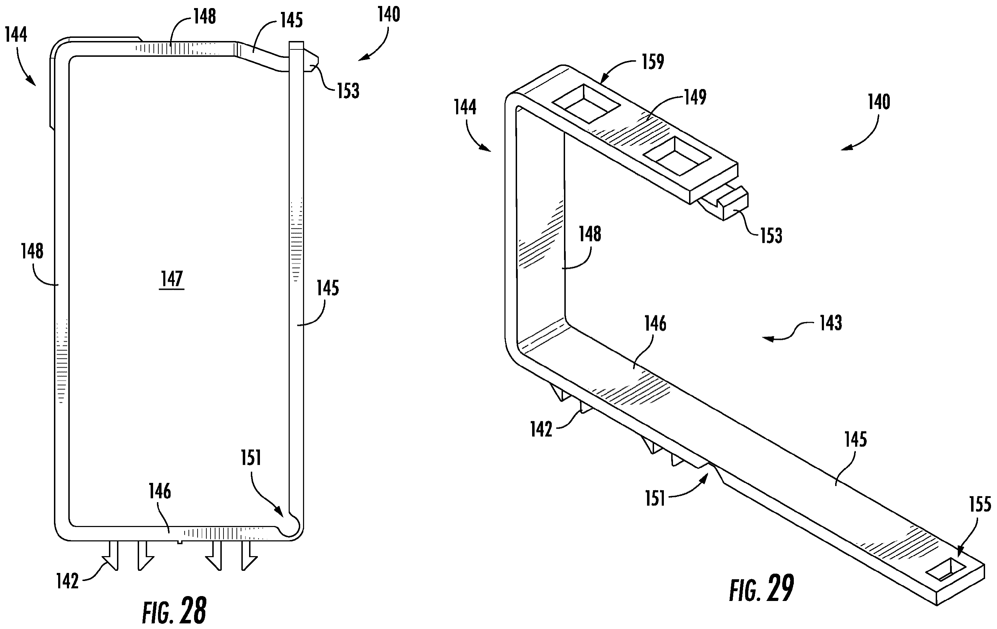

Referring to Fig. 29, and further depicted in Figs. 6A-6B, in some embodiments, a top wall 149 of the sidewalls 148 may include an opening 159 (e.g., top wall opening) configured to receive member 142 from a vertically adjacent cable management guide 140 and/or platform 161. For instance, opening 159 may align to opening 162 at the platform 161. Cable management guide 140 and platform 161 of a vertically adjacent arrangement (e.g., Figs. 6A- 6B) may permit member 142 to extend into opening 159 at a vertically lower frame 144, or platform 161, or both.

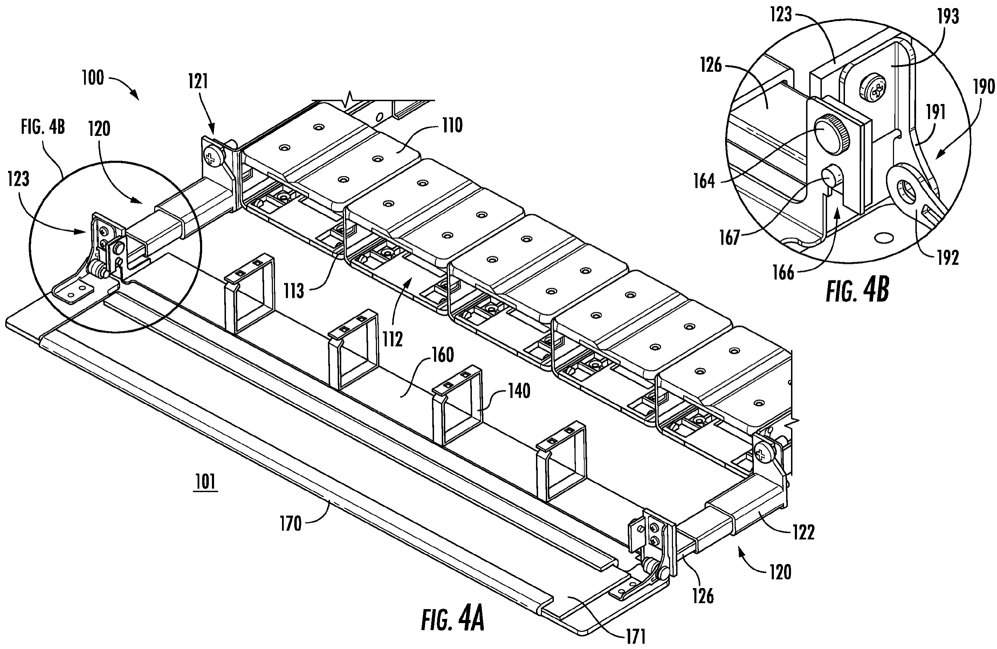

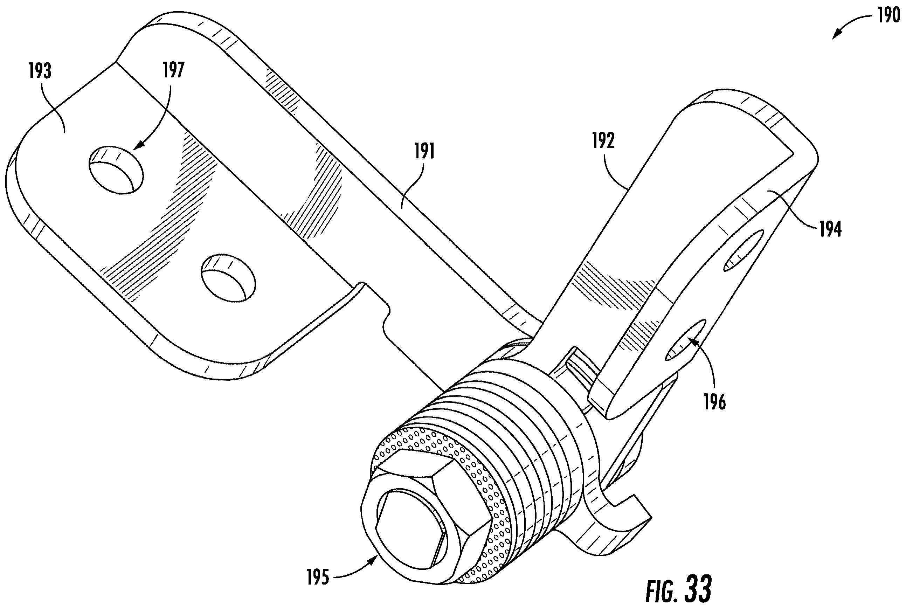

Referring now to Figs. 33-34, an embodiment of a hinge assembly 190 is provided. Embodiments of the hinge assembly 190 may form a torque detent hinge. Referring to Figs. 33-34, and depicted at Fig. 4B, the hinge assembly 190 includes a first arm 191 and a second arm 192. Attachment interfaces 193, 194 are attached to respective arms 191, 192. The first attachment interface 193 includes fastener openings 197 configured to couple to the second mount interface 123 at the adjustment arm assembly 120. The second attachment interface 194 includes fastener openings 196 configured to couple to a door 170 (Figs. 1-6B). The hinge assembly 180 may include a spring loaded device 195 to limit a speed at which the door 170 may articulate open or closed, such as to provide a "soft" opening or closing.

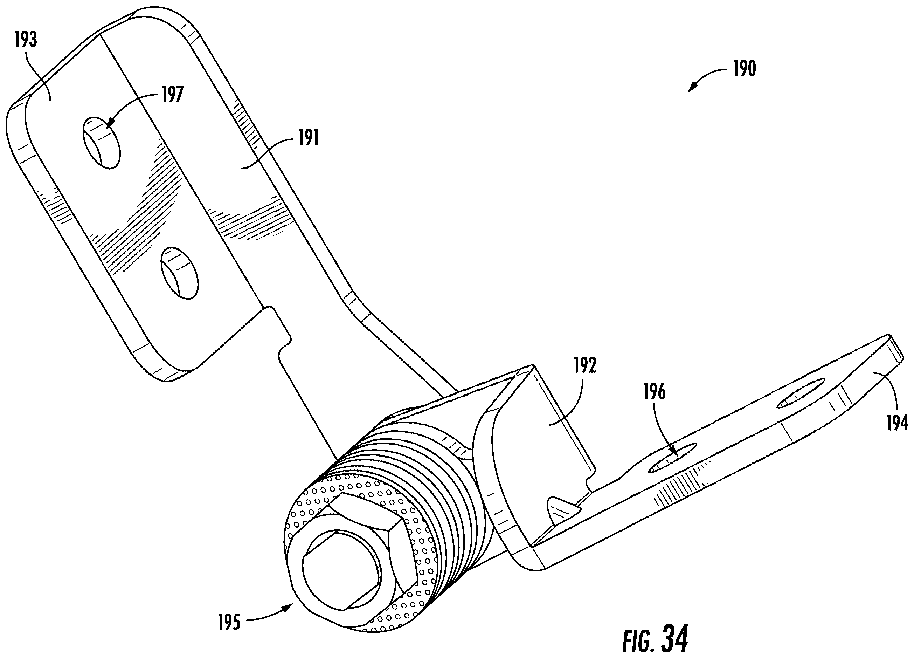

Referring to Fig. 34, in some embodiments, the arm 192 is positioned such that no portion of the arm 192 or a wall extends along a greater-length dimension of attachment interface 194. For instance, the greater-length dimension may correspond substantially to an extension of door 170 along the vertical direction V when in the closed position. The arm 192 attaches to the attachment interface 194 from a proximal end, such as to avoid forming a wall at which a cable may pinch or bind.

Embodiments of the adjustment arm assembly 120 may be configured to provide selective articulation along the depth direction D and provide for load bearing of the fiber management tray 160, door 170, and the mass of cables routing through cable management guides 140 at the tray 160.

In various embodiments, door 170 may include a label 171 selectively removable from the door 170. Door 170 may include hems, pegs, notches, slits, or slides into which label 171 may be positioned to attach to the door 170. In some embodiments, label 171 includes an adhesive configured to attach to the door 170 without slides, slots, slits, notches, pegs, hems, etc.

Embodiments provided herein may promote accommodation and routing of at least 288 fibers per RU, such as may facilitate VSFF connectivity. Additionally, or alternatively, embodiments provided herein may provide for multiple-RU cable management, routing, and load bearing (e.g., 1-RU, 2-RU, 4-RU, 6-RU, etc.), such as exemplarily depicted in Figs. 6A-6B.

Embodiments provided herein may facilitate cable management at a front cable management tray, improve speed and ease of installation and assembly of panels 100, bodies 110, and routing, and permit installation onto standard (e.g., 19-inch) and non-standard telecommunications racks and frames. Embodiments provided herein may remove a need for additional rack RU space, provide depth adjustment of front door and cable management tray, and accommodate at least 288 fibers per RU.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A telecommunications panel (100), comprising:
a body (110) comprising a cassette opening (112), wherein a mount arm (114) attaches the body (110) to a frame (180);
an adjustment arm assembly (120) attachable to the frame (180), the adjustment arm assembly (120) comprising a first sleeve (122) comprising a first mount interface (121) attachable to the frame (180), the adjustment arm assembly (120) comprising a second sleeve (126) comprising a second mount interface (123) attachable to a fiber management tray (160), the first sleeve (122) comprising a first sleeve opening (132) configured to receive a latch assembly (131), the latch assembly (131) selectively permitting adjustment of the second sleeve (126) along a depth direction (D) to and from the first sleeve (122);
a fiber management tray (160) attachable to the second mount interface (123), the tray (160) comprising a platform (161) comprising a platform opening (162); and
a cable management guide (140) comprising a guide frame (144) comprising a plurality of sidewalls (148), wherein the plurality of sidewalls (148) forms a cable routing area (147), and wherein an insert member (142) extends from the guide frame (144), the insert member (142) selectively positioned into the platform opening (162), wherein at least one of the plurality of sidewalls (148) comprises a selectively openable passage (143) providing access to the cable routing area (147).

2. A telecommunications panel (100) according to claim 1, wherein the plurality of sidewalls (148) of the guide frame (144) comprise an articulatable wall (145) configured to selectively open the passage (143) to provide access to the cable routing area (147).

3. A telecommunications panel (100) according to claim 1 or claim 2, wherein the guide frame (144) comprises a notch (151) at the plurality of sidewalls (148), wherein the notch (151) forms at least one sidewall (148) as an articulatable wall (145) configured to selectively open the passage (143) to provide access to the cable routing area (147).

4. A telecommunications panel (100) according to any preceding claim, wherein the guide frame (144) is approximately one rack-unit tall or two rack-units tall along the vertical direction (V).

5. A telecommunications panel (100) according to any preceding claim, wherein the fiber management tray (160) comprises a plurality of platform openings (162) positioned in adjacent arrangement along a lateral direction (L), wherein the plurality of platform openings (162) is configured to receive a plurality of cable management guides (140) at the platform (161) in adjacent arrangement along the lateral direction (L).

6. A telecommunications panel (100) according to any preceding claim, wherein the second sleeve (126) is insertable into the first sleeve (122) along the depth direction (D), and wherein a latch assembly (131) comprises a lever (128) comprising a user interface end (133) extending from the second sleeve (126) distal to an attachment end (125) at which the latch assembly (131) inserts into the first sleeve opening (132), the lever (128) optionally comprising a spring member (129) positioned between the user interface end (133) and the attachment end (125), the spring member (129) configured to generate a reactive force to position the attachment end (125) into the first sleeve opening (132) at the first sleeve (122).

7. A telecommunications panel (100) according to any of claims 1 to 5, wherein the adjustment arm assembly (120) comprises a central sleeve (124) insertable into the first sleeve (122), wherein the second sleeve (126) is insertable into the central sleeve (124), the central sleeve (124) positioned between the first sleeve (122) and the second sleeve (126) along the depth direction (D).

8. A telecommunications panel (100) according to claim 7, wherein the central sleeve (124) comprises a first attachment end (125) receivable into the first sleeve opening (132) from within the first sleeve (122).

9. A telecommunications panel according to claim 8, wherein the central sleeve (124) comprises a second attachment end (127) receivable into a second sleeve opening (135) at the second sleeve (126), wherein the second attachment end (127) is receivable into the second sleeve opening (135) from outside of the second sleeve (126).

10. A telecommunications panel (100) according to claim 8 or claim 9, wherein the first sleeve (122) comprises a plurality of first sleeve openings (132) positioned in adjacent arrangement along the depth direction (D), wherein a first slot (136) extends along the depth direction (D) to the plurality of first sleeve openings (132), wherein the first slot (136) permits translation of the first attachment end (125) along the depth direction (D) to the plurality of first sleeve openings (132).

11. A telecommunications panel (100) according to claim 7, wherein the central sleeve (124) comprises a plurality of second openings (135) positioned in adjacent arrangement along the depth direction (D), wherein the second sleeve (126) comprises a second attachment end (127) receivable into at least one of the second openings (135).

12. A telecommunications panel (100) according to claim 11, wherein the central sleeve (124) comprises a first lever (338) extending co-directional to a first clip (138), wherein a first attachment end (125)_ is positioned at a distal end of the first lever (338) to position the first attachment end (125) into the first sleeve opening (132), and wherein the first clip (138) comprises a first protrusion (225) positioned adjacent to the first attachment end (125) across the first sleeve opening (132).

13. A telecommunications panel according to claim 12, wherein the second sleeve (126) comprises a second lever (339) extending co-directional to a second clip (139), wherein a second attachment end (127) is positioned at a distal end of the second lever (339) to position the second attachment end (127) into the second opening (135), and wherein the second clip (139) comprises a second protrusion (227) positioned adjacent to the second attachment end (127) across the second opening (135).

14. A telecommunications panel (100) according to any preceding claim, comprising:
a hinge assembly (190) comprising a first arm (191) attachable to the second mount interface (123), and wherein a second arm (192) is attachable to a door, wherein the hinge assembly optionally comprises a torque detent hinge.

15. A telecommunications panel (100) according to any preceding claim, wherein the second mount interface (123) comprises an interface opening (165) configured to receive an attachment member (164) of the fiber management tray (160), wherein the attachment member optionally comprises a spring loaded screw.
